(19) Europäisches Patentamt / European Patent Office / Office européen des brevets

(11) **EP 4 660 133 A1**

(12) **EUROPEAN PATENT APPLICATION**
published in accordance with Art. 153(4) EPC

(43) Date of publication:
**10.12.2025  Bulletin 2025/50**

(21) Application number: **23919891.4**

(22) Date of filing: **15.11.2023**

(51) International Patent Classification (IPC):
**C01B 32/05** (2017.01)          **C01B 32/168** (2017.01)
**C01B 33/029** (2006.01)        **H01M 4/36** (2006.01)
**H01M 4/38** (2006.01)          **H01M 4/62** (2006.01)
**H01M 4/134** (2010.01)

(52) Cooperative Patent Classification (CPC):
**C01B 32/05; C01B 32/168; C01B 33/029;**
**H01M 4/134; H01M 4/36; H01M 4/38; H01M 4/62;**
Y02E 60/10

(86) International application number:
**PCT/JP2023/041032**

(87) International publication number:
**WO 2024/161756 (08.08.2024 Gazette 2024/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.02.2023  JP 2023014872**

(71) Applicant: **Group14 Technologies, Inc.**
**Woodinville, WA 98072 (US)**

(72) Inventors:
• **FUJITA Masato**
  **Tokyo 105-7325 (JP)**

• **HARADA Daisuke**
  **Tokyo 105-7325 (JP)**
• **YAMASHITA Mio**
  **Tokyo 105-7325 (JP)**
• **ITO Yuji**
  **Tokyo 105-7325 (JP)**
• **INOUE Hirofumi**
  **Tokyo 105-7325 (JP)**

(74) Representative: **Ostertag & Partner Patentanwälte**
**mbB**
**Azenbergstraße 35**
**70174 Stuttgart (DE)**

(54) **SI-C COMPOSITE PARTICLES, METHOD FOR PRODUCING SAME, AND USE OF SAME**

(57)     Provided are: Si-C composite particles containing a carbon material and silicon, wherein the Si-C composite particles have a true density by dry density measurement using helium gas of 2.20 g/cm3 or less, a peak is present at 450-495 cm-1 in a Raman spectrum of the Si-C composite particles, and the change in volume calculated by the following formula between before and after stirring in water is 10% or less; a negative electrode mixture layer for a lithium ion battery; and a lithium ion battery.

Change in volume (%) = {1 - (volume (cm3) of spheres the diameter of which is the 50% particle size (Dn50) in a number-based cumulative particle size distribution of the Si-C composite particles after stirring in water)/(volume (cm3) of spheres the diameter of which is the 50% particle size (Dn50) in a number-based cumulative particle size distribution of the Si-C composite particles before stirring in water)} $\times$ 100

**EP 4 660 133 A1**

[FIG. 1]

Regulus 1.0kV-D x15.0k SE(T)     3.00μm

**Description**

**Technical Field**

The present invention relates to Si-C composite particles, a method for producing such, and uses thereof.

**Background Art**

Lithium-ion batteries used in IT devices such as smartphones and tablet PCs, vacuum cleaners, power tools, electric bicycles, drones, and automobiles require negative electrode active materials that have both high capacity and high output. Silicon (theoretical specific capacity: 4,200 mAh/g), which has a higher theoretical specific capacity than graphite (theoretical specific capacity: 372 mAh/g) currently in use, has attracted attention as a negative electrode active material.

However, silicon (Si) expands and contracts in response to lithiation and delithiation, and the volume at the time of expansion is a maximum of about 3 to 4 times the volume at the time of contraction. As a result, silicon particles disintegrate and detach from the electrode, and thus lithium-ion batteries using silicon are known to have remarkably poor cycle characteristics. Therefore, extensive research is currently underway on not only use of silicon as a replacement for graphite, but also on use as a negative electrode material having reduced structural expansion and contraction as a whole. Among this research, many attempts have been made to form composites using carbonaceous materials.

As an example of a negative electrode material having a high capacity and long life, patent document 1 discloses a silicon-carbon composite (Si-C composite material) obtained by a method for producing silicon in the pores of a porous carbon by bringing a porous carbon particles and silane gas into contact at a high temperature. Patent Document 1 also discloses a material in which the Si-C composite material is further coated with a carbon layer by a chemical vapor deposition (CVD) method.

**Prior Art Literature**

**Patent Documents**

Patent Document 1: JP 2018-534720 A (Translation of PCT Application)

**Summary of Invention**

**Problem to Be Solved by Invention**

There have been no reports of fine particles being generated when the Si-C composite disclosed in Patent Document 1 is stirred in water.

A problem to be solved by one embodiment of the present invention is to provide Si-C composite particles having excellent initial Coulombic efficiency for a lithium-ion battery obtained when used as a negative electrode material, and a method for producing such.

A problem to be solved by another embodiment of the present invention is to provide a negative electrode material for a lithium-ion battery having excellent initial Coulombic efficiency, a negative electrode composite layer for a lithium-ion battery, and a lithium-ion battery provided therewith.

**Means for Solving Problem**

The means for resolving the above problems include the following aspects.

<1> Si-C composite particles provided with a carbon material and silicon,

wherein a true density by dry density measurement using helium gas is 2.20 g/cm$^3$ or less,
a peak is present at 450 to 495 cm$^{-1}$ in a Raman spectrum of the Si-C composite particles, and a volumetric change rate calculated by the following formula is 10% or less.

Volume change rate (%) = {1 - (volume (cm$^3$) of a sphere having a diameter of 50% particle size ($D_{n50}$) in a cumulative particle size distribution of a number standard of Si-C composite particles after stirring in water)/ (volume (cm$^3$) of a sphere having a diameter of 50% particle size ($D_{n50}$) in the cumulative particle size distribution of the number standard of Si-C composite particles before stirring in water)} $\times$ 100

<2> The Si-C composite particles according to <1>, wherein the carbon material is porous carbon, and the silicon is contained in at least a portion of pores of the porous carbon.

<3> The Si-C composite particles according to <1> or <2>, wherein a silicon content is 30 to 80 mass% relative to the total mass of the Si-C composite particles.

<4> The Si-C composite particles according to any one of <1> to <3>, wherein a BET specific surface area is 0.2 to 30.0 $m^2/g$.

<5> The Si-C composite particles according to any one of <1> to <4>, wherein a 50% particle size $D_{v50}$ in a volume-based cumulative particle size distribution is 1.0 to 30.0 $\mu$m.

<6> The Si-C composite particles according to any one of <1> to <5>, wherein an oxygen content is 0.1 to 5.0 mass% relative to the total mass of the Si-C composite particles.

<7> The Si-C composite particles according to any one of <1> to <6>, wherein, in the Raman spectrum of the Si-C composite particles, a ratio $I_{si}/I_G$ is 1.3 or less when defining a peak intensity at 450 to 490 cm$^{-1}$ as $I_{si}$ and an intensity of a G band (peak intensity near 1580 cm$^{-1}$) as $I_G$.

<8> The Si-C composite particles according to any one of <1> to <7>, wherein atomic number ratios according to narrow spectra of Si, O, and C of the Si-C composite particles are Asi, $A_O$, and Ac, respectively; among Si type ratios according to Si 2p spectral state analysis, ratios of $SiO_2$ and SiO are defined as $B_{SiO2}$ and $B_{SiO}$;

Asi is 0.05 or more; and at least one of the following formulas (1) and (2) is satisfied:

$$Y \geq 0.75 \qquad ... (1)$$

$$Y \geq -0.32X + 0.81 \ ... (2)$$

[in formulas (1) and (2), X = $I_{Si}/I_G$, and Y = Ac/(Ac + $A_{si} \times$ ($B_{SiO2}$ + Bsio)); note that Asi + Ao + Ac = 1.00].

<9> A negative electrode material for a lithium-ion battery, provided with the Si-C composite particles according to any one of claims <1> to <8>.

<10> A negative electrode composite layer for a lithium-ion battery, provided with the negative electrode material for a lithium-ion battery according to <9>.

<11> The negative electrode composite layer for a lithium-ion battery according to <10>, further provided with at least one selected from the group consisting of monolayer carbon nanotubes, multilayer carbon nanotubes, and vapor phase carbon fibers.

<12> A lithium-ion battery, provided with the negative electrode composite layer for a lithium-ion battery according to <10> or <11>.

<13> The method for producing Si-C composite particles according to any one of <1> to <8>, provided with: a step (A) for preparing a carbon precursor by a build-up method; a step (B) for carbonizing and activating the carbon precursor to obtain a carbon material; and a step (C) for preparing the Si-C composite particles by bringing the carbon material into contact with a silicon-containing gas and precipitating silicon in at least one of the pores and surfaces of the carbon material.

**Effect of Invention**

According to one embodiment of the present invention, there is provided Si-C composite particles having excellent initial Coulombic efficiency for a lithium-ion battery obtained when used as a negative electrode material, and a method for producing such.

Furthermore, according to another embodiment of the present invention, there is provided a negative electrode composite layer for a lithium-ion battery and a lithium-ion battery having excellent initial Coulombic efficiency.

**Brief Description of Drawings**

[FIG. 1] FIG. 1 is a diagram illustrating one example of a scanning electron microscope (SEM) of porous carbon used in Example 1.

[FIG. 2] FIG. 2 is a diagram illustrating one example of a scanning electron microscope (SEM) of porous carbon used in Example 2.

[FIG. 3] FIG. 3 is a diagram illustrating one example of a scanning electron microscope (SEM) of porous carbon used in Comparative Example 1 and Comparative Example 2.

**Embodiment of Invention**

The present invention will be described in detail below. Description of the constituent elements described below may be based on representative embodiments of the present invention, but the present invention is not limited to such embodiments.

In the present Specification, "to" indicating a numerical range is used to mean including the numbers stated before and after the numerical range as a lower limit and an upper limit.

In the present Specification, units stated either before or after the "to" indicating a numerical range apply to the other unless otherwise specified.

In the present Specification, combinations of two or more preferred aspects are more preferred aspects.

Unless otherwise specified, a "lithium-ion battery" may be referred to simply as a "battery" in the present Specification.

The term "step" in the present Specification is used not only for an independent step, but also when the intended purpose of the step is achieved even when it cannot be clearly distinguished from other steps.

Next, the present invention will be described in detail.

(Si-C composite particles)

The Si-C composite particles according to the present invention (hereinafter also sometimes referred to simply as "composite particles") are particulate matter containing a carbon material and silicon. The Si-C composite particles have no particular limitations and may have a structure in which a coat layer containing carbon and/or oxygen is present on the surface, and a particulate material containing carbon material and silicon is present on the inside of the coat layer.

The Si-C composite particles may contain silicon (hereinafter sometimes referred to as "Si") on the surface and inside of the carbon material.

The carbon material contained in the Si-C composite particles is preferably porous carbon, the carbon material is porous carbon, and it is more preferable that the silicon contained in the Si-C composite particles is contained in at least some of the pores of the porous carbon. Note that "porous carbon" refers to carbon having pores.

In the Si-C composite particles, it is preferable that a fine Si domain be formed uniformly inside the carbon material. "Si domain" refers to a region where silicon is present. Cycle characteristics are improved because the Si-C composite particles have a structure in which fine Si domains are uniformly formed inside the carbon material, resulting in isotropic expansion and contraction associated with charging and discharging.

This structure can be confirmed by cross-sectional SEM-EDS (Energy Dispersive X-ray Spectroscopy: Energy Dispersive X-ray Spectroscopy) observation of Si-C composite particles. When distributions of silicon and carbon overlap inside the Si-C composite particles, a fine Si domain at or below the spatial resolution of the SEM-EDS is understood to be dispersed uniformly. The sizes of the pores of the porous carbon and the Si domain are below the spatial resolution of the SEM-EDS, so the border between the carbon and the silicon cannot be clearly observed in isolation, so it is not possible to directly observe the present of silicon within the pores, but this suggests that the Si domain, which is below the spatial resolution of the SEM-EDS, is dispersed within the Si-C composite particles. That this state is not a state in which silicon and carbon are present as main components in the silicon carbide component can be easily understood, for example, from the fact that observing peaks attributed to silicon and carbon when performing X-ray diffraction measurements on Si-C composite particles rarely or never shows peaks attributed to silicon carbide, and the like. In X-ray diffraction measurements, for example, a peak attributed to silicon carbide is a peak on the SiC (111) plane. This is a peak appearing around 35° at $2\theta$ when Cu-K$\alpha$ rays are used as a beam source.

The Si-C composite particles may be obtained by bringing a silicon source such as silane ($SiH_4$) into contact with a particulate carbon material to precipitate silicon (usually in an amorphous form) in the pores of the carbon material.

At this time, by using porous carbon having minute pores as the carbon material, Si-C composite particles having fine Si domains formed uniformly within the particles can be obtained.

<<Raman spectrum>>

The Si-C composite particles are present at peaks of 450 to 495 cm$^{-1}$ in a Raman spectrum, preferably at Raman shift positions (Raman peak positions) of 450 to 495 cm$^{-1}$, close to 1,350 cm$^{-1}$, and close to 1580 cm$^{-1}$.

Usually, crystalline silicon, such as silicon wafers, particulate silicon, and heat-treated $SiO_x$, has a peak close to 520 cm$^{-1}$. Amorphous silicon has a peak that at a lower Raman shift than this, indicating that the Si-C composite particles have amorphous silicon when a peak is present at 450 to 495 cm$^{-1}$. When silicon is in an amorphous state, expansion and contraction during charging and discharging are relatively isotropic, and thus cycle characteristics may be further increased.

When a peak intensity of the Raman shift at 450 to 495 cm$^{-1}$ is defined as $I_{Si}$ and an intensity of the G band (that is, peak intensity close to 1,580 cm$^{-1}$) is defined as $I_G$, a ratio $I_{Si}/I_G$ is preferably 1.3 or less, more preferably 0.94 or less, even more preferably 0.64 or less, and most preferably 0.54 or less.

The fact that a silicon peak appears in the Raman spectrum indicates the presence of silicon on the surface of the Si-C composite particles, and/or in pores close to the surface of the Si-C composite particles, or the like.

**In** X-ray Photoelectron Spectroscopy (XPS: X-ray Photoelectron Spectroscopy), which will be described later, information from the surface of a substance to a depth of several nm may be obtained, but in Raman spectra, it is known that information of a depth of approximately 1 μm to a sub-micrometer level from the surface may be obtained in a carbon material (hereinafter, the position of information obtained in a Raman spectrum is also referred to as "close to surface").

The $I_{Si}/I_G$ of the Si-C composite particles being 1.3 or less indicates that the Si-C composite particles surface is not thickly covered by a component containing silicon, indicating a constitution containing silicon and carbon. On the other hand, when the percentage of silicon is very high, $I_{Si}/I_G$ becomes much larger than the above range. Due to $I_{Si}/I_G$ being within the above range, the surface of the Si-C composite particles also undergoes expansion and contraction to the same extent as the inside of the composite particles during charging and discharging of the battery, and the concentration on the surface of the Si-C composite particles can be avoided, leading to an improvement in cycle characteristics.

From the perspective of improving the specific capacity of the Si-C composite particles, the lower limit of the $I_{Si}/I_G$ is preferably 0.01, more preferably 0.02.

Note that the "peak intensity" is defined as the height from the baseline to the peak vertex after baseline correction.

The value of $I_{Si}/I_G$ may, for example, be changed by adjusting the reaction conditions (gas composition ratio, gas flow rate, temperature program, reaction time, and the like) in step (C) of the method for producing Si-C composite particles described later.

<<Half-width of peak of Si (111) plane>>

The half-width of the peak of the Si (111) plane in the XRD pattern of the Si-C composite particles is preferably 3.0° or more, as measured by powder X-ray diffraction (powder XRD) using Cu-Kα radiation.

A half-width of 3.0° or more means that the crystallite size of silicon in Si-C composite particles is small, which leads to the suppression of silicon destruction during charging and discharging of batteries. From the same perspective, the half-width is preferably 4.0° or more, and more preferably 5.0° or more. Moreover, the half-width is preferably 10.0° or less, and more preferably 8.0° or less. Note that the peak of the Si (111) plane refers to the peak originating from Si, which appears close to 28° at 2θ. Moreover, the "peak intensity" when determining the half-width is defined as the height from the baseline to the peak vertex after baseline correction.

<<X-ray photoelectron spectroscopy (XPS) spectrum>>

The Si-C composite particles preferably have the following elements.

When defining the atomic number ratios according to the narrow spectra of Si, O, and C of the (XPS: X-ray Photoelectron Spectroscopy) of the Si-C composite particles as Asi, $A_O$, and Ac, respectively, and among the Si type ratios according to Si 2p spectral state analysis, defining the ratios of $SiO_2$ and SiO as $B_{SiO2}$ and $B_{SiO}$, it is preferable that $A_{Si}$ is 0.05 or more and at least one of the following formulas (1) and (2) is satisfied.

$$Y \geq 0.75 \qquad \ldots (1)$$

$$Y \geq -0.32X + 0.81 \ldots (2)$$

[In formulas (1) and (2), X = $I_{Si}/I_G$, and Y = Ac/(Ac + $A_{Si} \times (B_{SiO2} + B_{SiO})$).]

$$\text{Note that } A_{si} + A_O + A_C = 1.00.$$

XPS is a method for obtaining information about the types, amounts, and chemical bonding states of elements present on the surface of a material, and it is known that information can be obtained to a depth of several nm from the surface of the material.

Here, Y, that is, Ac/(Ac + $A_{Si} \times (B_{SiO2} + B_{SiO})$) indicates the ratio of the mass of carbon to the sum of the mass of carbon and silicon oxides from the Si-C composite particle surface to a depth of several nm.

By satisfying any of the above, a battery containing Si-C composite particles has excellent initial Coulombic efficiency.

The value of Ac/(Ac + Asi $\times$ ($B_{SiO2}$ + Bsio)) may be changed, for example, by adjusting the reaction temperature, reaction time, reaction pressure, or type or concentration of a reaction gas in step (C), step (D), and/or step (E) in the method for producing composite particles described later.

<<True Density>>

Dry density of the Si-C composite particles measured using helium gas is 2.20 g/cm$^3$ or less. Having the true density be 2.20 g/cm$^3$ or less means that the carbon material in the Si-C composite particles is amorphous and that the structure of the carbon material is more isotropic.

The true density of the Si-C composite particles is lower than the literature value of the density of carbon or silicon, and thus it is thought that there are pores in the Si-C composite particles in which helium gas cannot enter from the outside of the particles. In light of this, the cycle characteristics can be improved when the true density is 2.20 g/cm$^3$ or less, and the decrease in silicon utilization can be suppressed because the amount of silicon carbide in the Si-C composite particles is small.

In addition, silicon carbide has a higher density than carbon or Si, so the true density increases when silicon carbide is included in the Si-C composite particles. From this perspective, the true density of the Si-C composite particles is preferably 2.10 g/cm$^3$ or less, more preferably 2.05 g/cm$^3$ or less, and more preferably 2.00 g/cm$^3$ or less.

The true density of the Si-C composite particles is preferably 1.60 g/cm$^3$ or more.

When the true density of the Si-C composite particles is 1.60 g/cm$^3$ or more, this means that the amount of silicon filling the pores of carbon in the composite particles is sufficient.

A true density of 1.60 g/cm$^3$ or more indicates that the amount of silicon filled into the pores of carbon in the Si-C composite particles is sufficient, and it is possible to increase the specific capacity or reduce the resistance of the Si-C composite particles. From the same perspective, the true density is more preferably 1.70 g/cm$^3$ or more, and is even more preferably 1.80 g/cm$^3$ or more.

The true density measured by dry density measurement using helium gas may be measured by a vapor phase replacement method.

A vapor phase replacement method is a method in which a sample and helium gas are placed in a container in which the volume has been measured in advance by helium gas in an environment maintained at a constant temperature, and a true density is calculated from a volume of the helium gas that the sample has pushed out, as well as the mass of the sample. For example, the AccuPyc (registered trademark) II 1340 Gas Pycnometer made by Micromeritics may be used as a device for the vapor phase replacement method.

<<BET specific surface area>>

Si-C composite particles preferably have a BET specific surface area of 0.2 to 30.0 m$^2$/g. Having a BET specific surface area of 0.2 m$^2$/g or more may suitably adjust the slurry viscosity during electrode fabrication, allowing for the production of good electrodes. From the same perspective, the BET specific surface area is more preferably 0.5 m$^2$/g or more.

Due to the BET specific surface area being 30.0 m$^2$/g or less, side reactions with the electrolyte can be reduced. From the same perspective, the BET specific surface area is more preferably 25.0 m$^2$/g or less.

The BET specific surface area is usually measured by a dedicated measuring device known in the relevant technical field, and is calculated from an adsorption isotherm using a BET method. Nitrogen is usually used as the adsorbed gas. The BET specific surface area can be adjusted to a desired range of BET specific surface area by adjusting the reaction conditions of step (C) of the method for producing Si-C composite particles described below.

<<Volume change rate>>

Si-C composite particles have a volume change rate calculated by the following formula of 10% or less.

Volume change rate (%) = {1 - (volume (cm$^3$) of a sphere having a diameter of 50% particle size ($D_{n50}$) in the cumulative particle size distribution of the number standard of Si-C composite particles after stirring in water)/(volume (cm$^3$) of a sphere having a diameter of 50% particle size ($D_{n50}$) in the cumulative particle size distribution of the number standard of Si-C composite particles before stirring in water)} $\times$ 100

When the above volume change rate before and after stirring the Si-C composite particles in water is 10% or less, it can be said that the change in particle size distribution is small and fine powder is suppressed by stirring in water, and thus, when such Si-C composite particles are used as the negative electrode material, the lithium-ion battery obtained is excellent in the initial Coulombic efficiency. In view of the above, the volume change rate of the Si-C composite particles is preferably 8% or less, more preferably 5% or less, and even more preferably 4% or less. Note that a method for stirring SiC composite particles in water will be described later.

The above volume change rate is found by measuring a 50% particle size ($D_{n50}$) in the cumulative particle size distribution of a number standard for Si-C composite particles before stirring in water and after stirring in water.

The volume change rate described above can be adjusted to 10% or less, for example, in the preparation of Si-C composite particles, by a method such as one for filling this carbon material with silicon, using a precursor of the carbon material synthesized by a build-up method.

<<50% particle size ($D_{n50}$) in a number-based cumulative particle size distribution>>

The Si-C composite particles preferably have a particle size ($D_{n50}$) of 50% in a number-based cumulative particle size distribution before and after stirring in water (hereinafter also referred to simply as "50% particle size ($D_{n50}$) in a number-based cumulative particle size distribution") of 1.0 to 10.0 $\mu$m, more preferably 1.5 to 8.0 $\mu$m, even more preferably 2.0 to 6.0 $\mu$m, and particularly preferably 2.0 to 4.0 $\mu$m.

This is because having a $D_{n50}$ of 1.0 $\mu$m or more can reduce side reactions with an electrolyte. Due to the fact that the $D_{n50}$ is 1.0 $\mu$m or more, the powder has excellent handling properties, it is easy to prepare a slurry having a viscosity or solid content concentration suitable for coating, and it is easy to increase density when using such as an electrode. In addition, having a $D_{n50}$ of 10.0 $\mu$m or less shortens the diffusion length of lithium in each particle, thus improving the rate characteristics of lithium-ion batteries, and making streaking and abnormal unevenness when coating the current collector using the slurry occur less readily.

The Si-C composite particles preferably have a particle size ($D_{n90}$) of 90% in a number-based cumulative particle size distribution before and after stirring in water (hereinafter also referred to simply as "90% particle size ($D_{n90}$) in a number-based cumulative particle size distribution") of 1.0 to 5.0 $\mu$m, more preferably 2.0 to 10.0 $\mu$m, even more preferably 2.5 to 8.0 $\mu$m, and particularly preferably 3.0 to 6.0 $\mu$m.

This is because having a $D_{n90}$ of 1.0 $\mu$m or more can reduce side reactions with an electrolyte. Due to the fact that $D_{n90}$ is 1.0 $\mu$m or more, the powder has excellent handling properties, it is easy to prepare a slurry having a viscosity or solid content concentration suitable for coating, and it is easy to increase density when used as an electrode. In addition, having a $D_{n90}$ of 15.0 $\mu$m or less shortens the diffusion length of lithium in each particle, thus improving the rate characteristics of lithium-ion batteries, and making streaking and abnormal unevenness when coating the current collector using the slurry occur less readily.

The Si-C composite particles preferably have a particle size ($D_{n10}$) of 10% in a number-based cumulative particle size distribution before and after stirring in water (hereinafter also referred to simply as "10% particle size ($D_{n10}$) in a number-based cumulative particle size distribution") of 0.5 to 10.0 $\mu$m, more preferably 0.8 to 8.0 $\mu$m, even more preferably 1.0 to 6.0 $\mu$m, and particularly preferably 1.5 to 3.0 $\mu$m.

This is because having a $D_{n10}$ of 0.5 $\mu$m or more can reduce side reactions with an electrolyte. Due to the fact that $D_{n10}$ is 0.5 $\mu$m or more, the powder has excellent handling properties, it is easy to prepare a slurry having a viscosity or solid content concentration suitable for coating, and it is easy to increase density when used as an electrode. In addition, having a $D_{n10}$ of 10.0 $\mu$m or less shortens the diffusion length of lithium in each particle, thus improving the rate characteristics of lithium-ion batteries, and making streaking and abnormal unevenness when coating the current collector using the slurry occur less readily.

$D_{n10}$, $D_{n50}$, and $D_{n90}$ may be measured by a laser diffraction particle size distribution meter described in an example described below.

<<Method of stirring in water>>

The method of stirring the Si-C composite particles in water (hereinafter also referred to simply as the "method of stirring in water") is as follows. The particle size distribution of the obtained Si-C composite particles after stirring in water is measured, and a 50% particle size ($D_{n50}$) and the like in the cumulative particle size distribution of a number standard can be determined.

- Treatment device: Thin film swirl type high-speed mixer (made by Primix Co., Ltd., Model No.: Filmix 40-40)
- Composition to be treated (mass ratio): Purified water: Si-C composite particles = 90:10 • Treated amount: 15 g in total
- Processing conditions: Peripheral speed 30 m/s 5 minutes

The volume ($cm^3$) of the sphere having a diameter of 50% particle size ($D_{n50}$) in the cumulative particle size distribution according to a number of criteria before and after stirring in water in the above formula is determined $D_{n50}$ of Si-C composite particles as $4\pi/3 \times$ (obtained 50% particle size ($D_{n50}$)/2)$^3$/(1.0 $\times$ 10$^{12}$) respectively when $D_{n50}$ units are $\mu$m. Using the volumes of these spheres, the above volume change rate is calculated.

This method of stirring in water mimics the mode of destruction suffered due to operations for dispersion and mixing when Si-C composite particles are used as negative electrode materials for lithium-ion batteries and processed into slurries for forming negative electrode composites. The Si-C composite particles that can withstand this destruction, or more specifically, those having a volume change rate which is 10% or less before and after stirring in water, can be said to be Si-C composite particles having the characteristic that fine powder is less likely to be generated during slurry preparation for forming electrode coupling, and lithium-ion batteries using such Si-C composite particles have excellent initial Coulombic efficiency.

<<50% particle size $D_{v50}$ in volume-based cumulative particle size distribution>>

It is preferable that $D_{v50}$, which is the 50% particle diameter in the volume-based cumulative particle size distribution of the Si-C composite particles, be 1.0 $\mu$m or more. This is because having a $D_{v50}$ of 1.0 $\mu$m or more can reduce side reactions with an electrolyte. When $D_{v50}$ is 1.0 $\mu$m or more, the powder has excellent handling properties, it is easy to prepare a slurry having a viscosity or solid content concentration suitable for coating, and it is easy to increase density when used as an electrode. From this perspective, $D_{v50}$ is more preferably 3.0 $\mu$m or more, and even more preferably 3.5 $\mu$m or more.

It is preferable that the $D_{v50}$ of the Si-C composite particles be 30.0 $\mu$m or less. Having a $D_{v50}$ of 30.0 $\mu$m or less shortens the diffusion length of lithium in each particle, thus improving the rate characteristics of lithium-ion batteries, and preventing streaking and abnormal unevenness when coating the current collector using the slurry. From this perspective, $D_{v50}$ is more preferably 20.0 $\mu$m or less, and even more preferably 15.0 $\mu$m or less.

It is preferable that $D_{v90}$, which is the 90% particle diameter in the volume-based cumulative particle size distribution of the Si-C composite particles, be 50.0 $\mu$m or less. Having a $D_{v90}$ of 50.0 $\mu$m or less shortens the diffusion length of lithium in each particle, thus improving the rate characteristics of lithium-ion batteries, and preventing streaking and abnormal unevenness when coating the current collector using the slurry. From this perspective, $D_{v90}$ is more preferably 40.0 $\mu$m or less, even more preferably 30.0 $\mu$m or less, and most preferably 20.0 $\mu$m or less.

These volume-based cumulative particle size distribution is measured, for example, by a laser diffraction particle size analyzer.

Examples of the particle size adjustment method of the carbon material contained in the Si-C composite particles include a breakdown method, a build-up method, and the like.

The breakdown method is a method for miniaturizing a sample by causing stress in the sample by applying energy as a force such as compression, impact, friction, and shear using a pulverizer or the like.

Examples of the preparation of carbon materials using the breakdown method include methods such as one in which a novolak phenol resin and a curing agent are mixed, heat-cured, and then carbide obtained by heat-sintering in an inert atmosphere is ground to a desired particle size and then activated. In this preparation method, the carbon material is obtained as amorphous particles by grinding. In the case of this exemplary method, grinding may be performed on any material, may be performed on a cured resin, may be performed on a carbide, or may be performed on a carbon material after activation.

On the other hand, the build-up method is a method for obtaining a target particle size by nucleation and nuclear growth from a liquid phase or a gas phase when synthesizing a target. Examples of build-up methods include chemical vapor deposition (CVD), liquid phase, and the like. For example, a liquid phase method for synthesizing a precursor of a carbon material (hereinafter also referred to as a "carbon precursor") using a solvent may be adopted as the build-up method. In this liquid phase method, fine carbon precursors precipitate in a solvent, but particles having the desired particle size and spherical shape are obtained by controlling nucleation and nuclear growth.

When the resin is used as a carbon precursor by the build-up method and the resin is synthesized, it is preferable to synthesize the curing resin or perform a curing step such as thermal curing before carbonizing the synthesized resin. This is to prevent the synthetic resin from melting and the particles of the resin from melting and bonding to each other by heat treatment in the step for carbonizing (that is, the carbonizing step) and increasing in size compared to the particle size at the time of synthesis. When the particle size differs significantly from the particle size at the time of synthesis, the necessity of grinding for particle size adjustment arises, and thus the effect of the build-up method may not be sufficiently obtained.

Furthermore, when ground to adjust particle size, the particle shape becomes an amorphous shape that is not spherical. Upon becoming an amorphous shape, the processing stress during grinding remains or creates a sharp shape, so it is thought that this may be a factor in the generation of fine powders after stirring in water.

Carbon materials and porous carbon are obtained by heat treating the obtained carbon precursors to carbonize and activate them. Adjustment of particle size by the breakdown method may be performed after the heat treatment, or further after each subsequent step described below. On the other hand, in the case of the build-up method, no special adjustment is required after each subsequent step because the carbon precursor often already has obtained the desired particle size, but when the agglomerated particles are produced, the particle size may be adjusted by grinding as necessary. To the extent that the effect of the present invention is not inhibited, even when the surface is slightly chipped by grinding, the powder may have an amorphous shape, but when fine powders that do not retain their original shape are generated, it is preferable to classify and remove them.

When Si-C composite particles are used as the negative electrode material, from the viewpoint of superiority in the initial Coulombic efficiency of the obtained lithium-ion battery, it is preferable that the method for synthesizing the precursor of the carbon material used for the Si-C composite particles be a build-up method.

The Si-C composite particles preferably have an oxygen content of 0.1 to 5.0 mass% relative to the total mass of the Si-C composite particles. When the oxygen content is 5.0 mass% or less, the irreversible capacity of the negative electrode of the lithium-ion battery can be reduced. From the same perspective, the oxygen content is more preferably 3.0 mass% or less, and even more preferably 2.0 mass% or less. When the oxygen content is 0.1 mass% or more, a high oxidation suppression ability is exhibited.

The oxygen content in the Si-C composite particles may be measured, for example, by an oxygen-nitrogen simultaneous measurement device.

In the present invention, unless otherwise specified, the oxygen content of the Si-C composite particles refers to the oxygen content of those stored within two days after production or in a non-oxidizing atmosphere. When the oxygen content cannot be measured within two days after production due to circumstances of the step, a value thereof may be considered equivalent to that within two days after production, for example, when stored in an inert atmosphere such as argon and measured at a later date. This is because when stored in an inert atmosphere, oxidation does not progress.

[Method for producing Si-C composite particles]

A method for producing Si-C composite particles of the present invention includes: a step (A) for preparing a carbon precursor by a build-up method; a step (B) for carbonizing and activating the carbon precursor obtained in step (A) to obtain a carbon material; and a step (C) for preparing Si-C composite particles by bringing the carbon material into contact with a silicon-containing gas and precipitating silicon in at least one of the pores and the surfaces of the carbon material.

(Step (A))

Step (A) is a step for preparing a carbon precursor by a build-up method. Carbon precursors are substances that become carbon materials by carbonization. The rate of volume change is reduced by preparing carbon precursors by a build-up method.

For example, when a spherical phenol resin is used as a carbon precursor, the spherical phenol resin is prepared by a build-up method, preferably using a solvent to synthesize the spherical phenol resin. When a carbon precursor is synthesized by the build-up method, a product of a desired particle size and a spherical shape can be obtained by controlling nucleation and nuclear growth by appropriately selecting reaction conditions.

When the resin is used as a carbon precursor in the build-up method, it is preferable to use a curing resin or to have a curing step such as thermal curing before carbonizing the resin (that is, a carbonizing step). This is to prevent the resins from dissolving in the carbonization step and significantly changing from their shape during synthesis. When the resins dissolve in each other in the carbonization step and change significantly from the shape at the time of synthesis, the necessity of grinding arises for particle size adjustment, and thus the effect of the build-up method may not be sufficiently obtained.

(Step (B))

Step (B) is a step for carbonizing and activating the carbon precursor obtained in step (A) to obtain a carbon material.

The carbon material is preferably porous carbon. It is preferable for Si-C composite particles to have a structure including silicon within the pores of the porous carbon, and thus it is preferable for the porous carbon to have a pore volume that can carry silicon inside.

A carbon material made from carbon precursors by a build-up method may be used as the porous carbon insofar as •BR>. Examples of porous carbon include activated carbon, activated carbon fibers, molecular sieving carbon, inorganic template carbon, or the like.

Hard carbon is preferable as the type of carbon. Hard carbon is obtained, for example, by carbonizing a phenolic resin. Heat treatment and the like in an inert atmosphere, for example, at preferably 600°C to 1400°C, and more preferably 700 to 1400°C, can be mentioned as a carbonization method.

As a method of activation, a method can be selected from well-known production methods to the extent that the effect of the invention is not impaired. As a method of excitation, a method such as one wherein a carbide made by carbonizing a resin is brought into contact with an excipient gas such as steam or carbon dioxide at 700°C to 1,100°C, for example, can be mentioned.

The porous carbon is preferably spherical. Spherical porous carbon that has been carbonized and activated from spherical phenolic resin is more preferable. Moreover, spherical porous carbon that has not undergone a pulverizing step is even more preferable from the perspective that the spherical shape can be maintained.

Moreover, in the nitrogen gas adsorption test of the porous carbon, when defining the pore volume when a relative pressure $P/P_0$ is 0.99 as $V_{0.99}$, $V_{0.99}$ is more preferably between 0.25 cc/g and 150 cc/g.

In addition, it is preferable for silicon to be included as fine domains within the Si-C composite particles, and thus it is even more preferable for the porous carbon to have many fine pores. Specifically, in a nitrogen adsorption test of porous carbon, when the pore volume when the relative pressure $P/P_0$ is 0.01 is set to $V_{0.01}$, $V_{0.01}/V_{0.99}$ is more preferably 0.45 or more, and most preferably 0.50 or more. The nitrogen adsorption test may be performed using a known method.

The porous carbon may contain components other than carbon or may not contain components other than carbon to the extent that such does not inhibit performance. It is preferable that 90 mass% or more of the porous carbon be carbon, and 95 mass% or more is more preferable.

(Step (C))

Step (C) involves placing the obtained carbon material in a reactor and bringing a silicon-including gas into contact with the carbon material to deposit silicon either in the pores or both in the pores and on the surface of the porous carbon, thereby obtaining Si-C composite particles. Not limited to silicon, the above method is referred to as Chemical Vapor Infiltration (Chemical Vapor Infiltration, CVI). In the present invention, the precipitation of a carbon material of silicon using CVI into pores is sometimes referred to as Si-CVI.

The form of the reactor is not limited. Examples of reactors include a furnace having a stirring function for powders such as a stationary furnace, a fluidized bed furnace, and a rotary kiln, as well as a continuous furnace such as roller hearth kiln and pusher furnace.

Silane gas may preferably be used as the silicon-containing gas. Silane gas may be used in a mixture having an inert gas such as helium or argon, or having a reducing gas such as hydrogen.

The reaction temperature is not limited as long as a silicon-including gas such as silane gas decomposes and deposits silicon in the pores of the porous carbon at the temperature, but is preferably 300°C to 500°C.

At temperatures above 300°C, silane gas is sufficiently decomposed, and silicon precipitates well. At 500°C or lower, silicon precipitates more significantly in the pores than on the surface of porous carbon (for example, including openings in the pores).

In general, the surface area of the pores in porous carbon is much larger than the external surface area, resulting in a significantly greater amount of silicon being deposited within the pores of the porous carbon. It is preferable for silicon to be present within the pores rather than on the external surface of the porous carbon, as this enhances the durability of the Si-C composite particles against the stresses within the Si-C composite particles associated with the expansion and contraction of silicon during battery charge and discharge. At higher processing temperatures, deposition on the surface of the porous carbon becomes more pronounced, tending to increase the number of areas where the openings of the pores are blocked.

As the deposition of silicon within the pores of the porous carbon increases, a reaction temperature of 450°C or lower is preferable, 420°C or lower being even more preferable.

Production conditions such as gas composition ratio, gas flow rate, and temperature program are adjusted as appropriate while observing the properties of the Si-C composite particles.

The content of silicon in the Si-C composite particles may be prepared by adjusting the treatment time of step (C). From the viewpoint of excellent capacity of the lithium-ion battery containing the Si-C composite particles and being able to reduce the volume change rate, the content of silicon is preferably 30 to 80 mass%, more preferably 35 to 75 mass%, even more preferably 40 to 70 mass%, and particularly preferably 45 to 65 mass%, relative to the total mass of the Si-C composite particles. In addition, from the viewpoint of reducing the rate of volume change of the Si-C composite particles, the content of silicon is preferably 35 to 75 mass%, and more preferably 40 to 70 mass%, relative to the total mass of the Si-C composite particles.

After producing Si-C composite particles through steps (A), (B), and (C), the Si-C composite particles may agglomerate. In that case, it is preferable that disintegration be performed, returning the particles to the shape and particle size distribution of the porous carbon material. However, it is preferable that the Si-C composite particles are crushed without adding excess energy, thereby leaving the particle shape unchanged.

The method for producing the Si-C composite particles according to the present invention may further include step (D) or step (D) and step (E).

<<Step (D)>>

Step (D) involves placing the Si-C composite particles obtained in step (C) in a reactor and bringing a gas including a hydrocarbon having an unsaturated bond into contact with the Si-C composite particles at the temperature of step (C) or lower. A gas of a hydrocarbon having a double or triple bond may be used as a gas of a hydrocarbon having an unsaturated bond. When the hydrocarbon is a compound that does not gasify at normal pressure due to low vapor pressure, the hydrocarbon may be used at a pressure lower than normal pressure. Preferable examples of the hydrocarbon include acetylene, ethylene, propylene, and 1,3-butadiene, which are gases at normal pressure, acetylene and ethylene being more preferable. Only one type of hydrocarbon may be used, or a plurality of hydrocarbons may be used. In addition, for the gas, for example, it is permissible to use such after mixing in an inert gas such as helium or argon, or a reducing gas such as hydrogen.

In step (D), the method of raising the temperature and depositing carbon on the surface, such as a carbon CVD, is not suitable because a thick carbon coating is formed.

In step (D), treatment at a temperature at or below the temperature in step (C) is required to react the Si-H group with an unsaturated bond. When exceeding this temperature, the amount of Si-H groups that decompose increases, making it difficult for the desired reaction, that is, the reaction between the Si-H groups on the surface of Si-C composite particles and the unsaturated bond of the hydrocarbon, to occur. Moreover, the reactivity of silicon in Si-C composite particles is very high, at high temperatures exceeding the temperature of step (C), and thus a reaction occurs between porous carbon and silicon, resulting in the generation of silicon carbide, which decreases the capacity of the silicon. The reaction temperature in step (D) is preferably 450°C or less, and 420°C or less is more preferable. 400°C or less is more preferable.

There is no restriction on the lower limit of the reaction temperature as long as it is a temperature at which the hydrocarbon having an unsaturated bond reacts on the surface of Si-C composite particles, but the reaction rate is low at low reaction temperatures, and thus the temperature is preferably 100°C or higher, and more preferably 150°C or higher.

In step (D), an unsaturated bond is reacted with the Si-H group, so it is thought that the Si-C composite particles have hydrocarbons bound to their surfaces. Due to the low reaction temperature, it is thought that the substances present on the surface of Si-C composite particles are hydrocarbon-derived substances having high electron resistance and having unsaturated bonds, unlike conductive carbon such as carbon from carbon CVD. For this reason, it is preferable that a small amount of a hydrocarbon-derived substance having an unsaturated bond is present on the surface. Therefore, it is preferable that the weight change before and after step (D) be small. The increase in mass of Si-C composite particles having a layer including the hydrocarbon obtained in step (D) relative to the mass of Si-C composite particles before step (D) is more preferably 1.0 mass% or less, even more preferably 0.5 mass%, and most preferably 0.2 mass% or less.

<<Step (E)>>

Step (E) is a step for oxidizing the substance obtained up to step (D). This step (E) is preferably a step for oxidizing the surface of the substance obtained up to step (D). Oxidation can be performed by bringing the substance obtained up to step (D) layer into contact with a gas including oxygen (more specifically, an oxidizing gas). A gas including oxygen preferably has an oxygen concentration of 1 to 25 vol%, more preferably 1 to 20 vol%, and even more preferably 5 to 20 vol%. When the oxygen concentration is within the above range, the oxygen is diluted with argon, nitrogen, or the like. Air may be used as a gas including oxygen, but to perform stable oxidation, it is preferable that the humidity of the air be adjusted and kept constant.

The reaction temperature, that is, the temperature at which the coat layer is brought into contact with a gas containing oxygen, is preferably equal to or higher than room temperature and 200°C or less. Exceeding 200°C is not preferable, as it may cause decomposition of the coat layer or excessive oxidation of silicon.

The reaction time, that is, the time for bringing the coat layer into contact with a gas containing oxygen, is, for example, 0.1 to 120 hours.

In step (E), it is acceptable to change the oxygen concentration for oxidation treatment.

It is preferable that heat treatment be performed in an inert atmosphere or under low pressure after bringing the coat layer into contact with the gas including oxygen. The temperature during heat treatment is preferably 400°C or below. By performing heat treatment at or below 400°C, it is believed that unreacted Si-H groups may be decomposed and converted into silicon, thereby stably implementing the oxygenic formation of a composite in the coat layer. The heat treatment time is, for example, 0.1 to 100 hours.

It is preferable that step (C) and step (D) be carried out continuously. The Si-C composite particles obtained in step (C) have a high reactivity of the surface silicon, so when exposed to the atmosphere, oxidation progresses, and the Si-H groups on the surface are reduced. Therefore, it is preferable that step (C) and step (D) be carried out continuously without exposure to the atmosphere (air). The time between step (C) and step (D) is not limited as long as the Si-C composite particles are not exposed to the atmosphere. For example, after step (C), step (D) may be performed after storing in an inert atmosphere. Moreover, when the Si-C composite particles obtained in step (C) do not come into contact with the atmosphere, different devices may be used for step (C) and step (D).

Different devices may be used in step (D) than are used in step (E). Moreover, it is acceptable to carry out step (D) and step (E) a plurality of times. Examples include: performing step (E) followed by step (D), performing step (E) then performing step (D) and continuing to perform step (E), and the like.

<<Negative electrode material>>

The negative electrode material for a lithium-ion battery according to the present invention contains Si-C composite particles according to the present invention. The Si-C composite particles may be used by mixing two or more types.

Here, "negative electrode material" refers to a compound of the negative electrode active material and the negative electrode active material together with another material. The negative electrode material may be further mixed with other negative electrode materials to form a mixed negative electrode material.

Examples of the other negative electrode materials include those generally used as a negative electrode material of lithium-ion batteries, for example, graphite, hard carbon, soft carbon, lithium titanate ($Li_4Ti_5O_{12}$), silicon, tin, other alloy-based active materials and composite materials thereof, and the like. These other negative electrode materials are usually used in particle form. In addition, one type or two or more types of these other negative electrode materials may be used. Among these, graphite particles and hard carbon are particularly preferable as other negative electrode materials.

When other negative electrode materials are mixed to form a mixed negative electrode material, the Si-C composite particles are adjusted to 1 to 50 mass% in the mixed negative electrode material. Preferably, the Si-C composite particles are adjusted to 2 to 25 mass% in the mixed negative electrode material. By mixing and using the other negative electrode material, it is possible to create a mixed negative electrode material that maintains the excellent properties of the Si-C composite particles while also possessing the excellent properties of another negative electrode. When using a plurality of types of materials as negative electrode materials, such may be used after mixing in advance, or may be added sequentially when preparing the slurry for forming the negative electrode mixture, as described later.

Commercially available mixers and stirrers may be used as a device for mixing Si-C composite particles with other negative electrodes. Specific examples of the devices include mixers such as those for mortar, ribbon mixers, V-type mixers, W-type mixers, one-blade mixers, and Nauta mixers.

<Negative electrode composite layer for lithium-ion batteries>

The negative electrode composite layer for lithium-ion batteries according to the present invention (hereinafter also referred to simply as the "negative electrode composite layer") includes a negative electrode material containing Si-C composite particles according to the present invention. The negative electrode composite layer generally includes of a negative electrode material, a binder, and a conductivity aid as an optional component.

The method for producing the negative electrode composite layer may be a known method such as, for example, that illustrated below.

The method for producing the negative electrode composite layer uses, for example, a negative electrode material, a binder, a conductivity aid as an optional component, and a solvent to prepare a slurry for forming the negative electrode mixture. The slurry is coated onto a current collector such as a copper foil and dried. A current collector on which a slurry is applied is further dried under vacuum to remove a solvent and produce a negative electrode sheet composed of a negative electrode composite layer and a current collector. Next, the negative electrode sheet is cut or punched into a required shape and size, then pressed to improve the density of the electrode composite layer (hereinafter referred to as "electrode density"). An energy density of the battery is improved when electrode density is improved.

The method of pressing the negative electrode sheet is not particularly limited as long as the process can achieve a desired electrode density, but examples include uniaxial pressing, roll pressing, and the like. In an example that follows, a step of performing pressing after shape processing is exemplified, but shape processing may be performed after pressing. The negative electrodes having this desired shape and electrode density may be further attached to the current collector as necessary.

Any binder commonly used in the negative electrode composite layer for a lithium-ion battery may be appropriately selected as the binder. Examples of the binders include: polyethylene, polypropylene, ethylene-propylene terpolymer, butadiene rubber, styrene-butadiene rubber (SBR), butyl rubber, acrylic rubber, polyvinylidene fluoride (PVdF), polytetrafluoroethylene (PTFE), polyethylene oxide, polyepichlorohydrin, polyphosphazene, polyacrylonitrile, carboxymethyl cellulose (CMC) and salts thereof, polyacrylic acid, polyacrylamide, and the like. One type of binder may be used alone, or two or more types may be used.

The amount of binder is preferably 0.5 to 30 parts by mass relative to 100 parts by mass of the negative electrode material.

The conductivity aid is not particularly limited so long as it serves to impart electronic conductivity and dimensional stability (the ability to absorb volume changes due to the insertion and removal of lithium) to the electrode. Examples of conductivity aids include carbon nanotubes, carbon nanofibers, vapor-phase carbon fibers (for example, "VGCF (registered trademark)-H" produced by Showa Denko K.K.), conductive carbon black (for example, "Denka Black (registered trademark)" produced by Denka Co., Ltd., "SUPERC65" produced by Imerys Graphite & Carbon, and "SUPERC45" produced by Imerys Graphite & Carbon), conductive graphite (for example, "KS6L" produced by Imerys Graphite & Carbon, and "SFG6L" produced by Imerys Graphite & Carbon), and the like.

One type of conductivity aid may be used alone, or two or more types may be used.

The conductivity aid preferably includes at least one selected from the group consisting of carbon nanotubes, carbon nanofibers, and vapor phase carbon fibers, and more preferably includes at least one selected from the group consisting of single layer carbon nanotubes, multilayer carbon nanotubes, and vapor phase carbon fibers.

The fiber length of these conductivity aids is preferably 1/2 or more of the $D_{v50}$ of the Si-C composite particles. With this length, these conductivity aids serve as a bridge between the negative electrode active materials including the Si-C composite particles, improving cycle characteristics. Furthermore, when a single-layer carbon nanotube or multilayer carbon nanotube having a fiber diameter of 15 nm or less is used as a conductivity aid, it is preferable from the perspective that the number of crosslinks increases by the same amount as when thicker carbon nanotubes are used. Moreover, being more flexible, such is preferable from the perspective of improving electrode density.

The amount of the conductivity aid is preferably 1 to 30 parts by mass relative to 100 parts by mass of the negative electrode material.

There are no particular restrictions on the solvent used when preparing the slurry for electrode coating, and examples include N-methyl-2-pyrrolidone (NMP), dimethylformamide (DMF), isopropanol, tetrahydrofuran (THF), water, and the like. In the case of a binder using water as a solvent, it is also preferable that a thickener be used in combination. The amount of solvent may be adjusted to a viscosity that allows the slurry to easily coat the current collector.

<Lithium-ion battery>

The lithium-ion battery includes a negative electrode composite layer for the lithium-ion battery. The lithium-ion battery usually includes a negative electrode consisting of the negative electrode composite layer and current collector, a positive electrode consisting of the positive electrode composite layer and current collector, at least one of a non-aqueous electrolyte solution and non-aqueous polymer electrolyte present therebetween, a separator, and a battery case that houses these components. The lithium-ion battery may include the negative electrode composite layer, and other constitutions may be adopted without particular limitation, including conventionally known constitutions.

The positive electrode composite layer usually includes a positive electrode material, a conductivity aid, and a binder. As used in the present Specification, "positive electrode material" refers to a positive electrode active material or a compound of a positive electrode active material and another material. A general configuration found in a usual lithium-ion battery may be used for the positive electrode in the lithium-ion battery.

The positive electrode material is not particularly limited when it is a material used as a positive electrode material for a general lithium-ion battery. Examples of the positive electrode material include $LiCoO_2$, $LiNiO_2$, $LiMn_2O_4$, $LiCo_{1/3}Mn_{1/3}Ni_{1/3}O_2$, $LiCo_{0.6}Mn_{0.2}Ni_{0.2}O_2$, $LiCo_{0.8}Mn_{0.1}Ni_{0.1}O_2$, carbon-coated $LiFePO_4$, and the like. One type of positive electrode material may be used, or two or more types may be mixed to use as a mixed positive electrode material.

A conductivity aid, binder, and solvent mentioned in the negative electrode section may be used for slurry preparation. Aluminum foil is preferably used as the current collector.

The non-aqueous electrolytic solution and the non-aqueous polymer electrolyte used in the lithium-ion battery may be used as an electrolytic solution for a well-known lithium-ion battery. For the electrolytic solution, a lithium salt such as $LiClO_4$, $LiPF_6$, $LiAsF_6$, $LiBF_4$, $LiSO_3CF_3$, or $CH_3SO_3Li$, for example, is dissolved in the following solvent or polymer. Examples of solvents include: non-aqueous solvents such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, and γ-butyrolactone; gel-like polymers containing polyethylene oxide, polyacrylonitrile, polyvinylidene fluoride, and polymethyl methacrylate; and polymers having an ethylene oxide bond.

Moreover, a small amount of an additive commonly used in electrolyte solutions for lithium-ion batteries may be added to the non-aqueous electrolyte solution. Examples of additives include: vinylene carbonate (VC), biphenyl, propanesultone (PS), fluoroethylene carbonate (FEC), ethylene sultone (ES), and the like, where VC and FEC are preferable. The amount of addition is preferably 0.01 to 20 mass% relative to 100 mass% of the non-aqueous electrolyte solution.

Any material that can be used in a typical lithium-ion battery may be freely selected as a separator, including combinations thereof, such as microporous films made of polyethylene or polypropylene. Such separators may also have particles such as $SiO_2$ and $Al_2O_3$ mixed as fillers or adhered to the surface.

There are no particular restrictions for a battery case, as long as the positive and negative electrodes, separator, and electrolyte solution can be accommodated. In addition to commercially available battery packs, cylindrical cells of type 18650, coin-type cells and the like, other standardized forms in the industry, those packed in aluminum packaging, and the like are given for the battery case, and there may be freely designed and used therefor.

Each electrode may be stacked and packed for use. Moreover, single cells may be connected in series and used as batteries and modules.

**Examples**

The present invention will be described in detail below by presenting an example and comparative example, but the present invention is not limited to these examples. The measurement of physical properties and battery evaluation were conducted as follows.

<True density measurement>

After vacuum drying a sample at 180°C for 12 hours, the sample was filled in the measurement cell to 40% to 60% in a dry argon atmosphere in a glove box, and the weight of the sample was measured after tapping the cell more than 100 times. The sample was then taken out into the atmosphere and, via the following method, dry density measurement was performed by the constant volume expansion method using helium gas, and a true density was calculated.

- Device: Micromeritics AccuPyc (registered trademark) II 1340 Gas Pycnometer
- Measurement cell: Aluminum, depth 39.3 mm, inner diameter 18 mm
- Carrier gas: Helium gas
- Gas pressure: 19.5 psiG (134.4 kPaG)
- Number of purges during measurement: 200 times
- Temperature: 25°C $\pm$ 1°C

<Raman Si Peaks and $I_{Si}/I_G$>

Measurements were conducted under the following conditions.

- Micro-Raman spectrometer: Horiba Ltd. LabRAM (registered trademark) HR Evolution
- Excitation wavelength: 532 nm
- Exposure time: 10 seconds
- Accumulation count: 2 times
- Diffraction grating: 300 lines/mm (600 nm)
- Measurement sample: Used a small spatula to place Si-C composite particles on a glass slide, ensuring the powder was uniform. Widened beyond the measurement range below.
- Measurement range: 80 $\mu$m vertically $\times$ 100 $\mu$m horizontally. Only Si-C composite particles were spread within the measurement range.
- Number of points: Conducted 100 point measurements using a vertical feed of 17.8 $\mu$m and a horizontal feed of 22.2 $\mu$m, obtained averaged spectra, and performed the following analysis.

Observed the Si peak at 450 to 495 cm$^{-1}$ in the Raman spectrum.

The intensity of this Si peak is denoted $I_{Si}$, and the ratio of the peak intensity ($I_G$) close to 1,580 cm$^{-1}$ is ($I_{Si}/I_G$).

<X-ray photoelectron spectroscopy (XPS) spectrum>

[Measuring Device]

- Device: PHI Quantera II (made by ULVAC-PHI)
- X-ray source: Al monochrome (25W, 15kV)
- Analysis range: ø100 $\mu$m
- Electron, ion neutralization gun: ON
- Photoelectron detection angle: 45 degrees
- Narrow scan Pass Energy: 55 eV Step: 0.2 eV Dwell: 20 ms

- Sweep time: O (25) C, Si (50)

[Analysis Method]

[Energy Compensation]

The narrow spectrum was corrected so that the peak of carbon 1s was 284.6 eV.

[C, O, Si atomic number ratio Ac, Ao, $A_{si}$]

The area ratio of the Narrow spectra of C, O, and Si was calculated as the atomic number ratio. The sum of the atomic number ratios Ac, Ao, and $A_{si}$ of all C, O, and Si was set to 1.00.

[Si type state ratio $B_{SiO2}$, $B_{SiO}$, $B_{Si}$]

For the 2p narrow spectrum of Si, peak fitting was performed using the following method to calculate the state ratios $B_{SiO2}$, $B_{SiO}$, and $B_{Si}$ of Si species. (Chemical shift) Si0 value = 99eV, Si2 value = 101eV, and Si4 value = 103eV.

(Peak fitting method)

The half width and peak top were automatically adjusted by analysis software so that the residual between the peak fitting result and the measurement result was minimized. Note that the peak top was adjusted at a width of $\pm 0.5$ eV for all three components. The analysis software was the software provided with the above measuring device.

- Background subtraction method: Shirley method
- Functions: Gauss-Lorentz

Si0 value means so-called standalone Si. Si2 value means SiO. Si4 value means $SiO_2$. The monovalent and trivalent Si were excluded because their intensity was small, and the accuracy of peak fitting was therefore low. Si2 values generally include silicon carbide, but when looking at the peak shape of the C1s Narrow spectrum, no disturbances in the peak shape (such as shoulder peaks and tailings) involved in the chemical shift of 282.5 to 283.0 eV derived from silicon carbide were observed, and thus the amount of silicon carbide present was considered to be below the lower detection limit. Therefore, it was thought that the peak Si2 value meant only SiO.

<Particle size distribution measurement>

One scoop of a very small spatula of the created Si-C composite particles sample described below and two drops of a 100-fold diluted solution of a non-ionic surfactant (SARAYA Co., Ltd., Coconut Detergent High Power) at 32 mass% were added to 15 mL of water, and this was ultrasonically dispersed for 3 minutes. The following method was used to measure this dispersion.
The particle size distribution was measured for the above samples using a laser diffraction type particle size distribution measuring instrument (made by Seishin Corporation, Cat. No.: LMS-2000e), and the volume reference cumulative particle size distribution was calculated, and the 10% particle size $D_{v10}$ ($\mu$m), 50% particle size $D_{v50}$ ($\mu$m), and 90% particle size $D_{v90}$ ($\mu$m) were determined. In addition, a number-based cumulative particle size distribution was calculated in the same manner to obtain the 10% particle size $D_{n10}$ ($\mu$m), the 50% particle size $D_{n50}$ ($\mu$m), and the 90% particle size $D_{n90}$.

<Silicon content rate (mass%)>

X-ray fluorescence analysis (XRF) was performed on the samples under the following conditions to determine the silicon content.

- Fluorescent X-ray device: Rigaku Corporation, NEX CG
- Tube voltage: 50 kV
- Tube current: 1.00 mA
- Sample cup: Polyethylene sample container 1530 type
- Sample weight: 2 to 3 g
- Sample height: 5 to 18 mm

Sample cups were filled with samples and X-ray fluorescence analysis (XRF) was performed using a calibration method under the above conditions to calculate the silicon content in Si-C composite particles in units of mass%.

The calibration curve was determined in a first-order regression using five Si-C composites having different silicon content as standard samples. The standard samples used to create the calibration curve are as follows.

- Silicon content ratio (mass%): 35.4, 44.7, 56.3, 62.0, 68.1
- Method for Measuring Silicon Content of Standard Samples 0.01 g of the sample was taken in a platinum crucible and melted along with sodium carbonate potassium. The fusion was heated and decomposed using nitric acid in a PFA beaker, and after constant volume, the fusion was measured by an IPC emission analysis method. Analysis was performed at n = 2, and the average value was set to the silicon content.
- ICP emission spectrometer: Agilent 5110 made by Agilent Technology Co., Ltd.

<Oxygen content (mass%)>

A 20 mg sample was weighed in a nickel capsule, and the oxygen content ratio in the Si-C composite particles was calculated in mass% using the oxygen-nitrogen analysis device EMGA (registered trademark) -920 (made by Horiba, Ltd.). The carrier gas used was argon. By dividing the oxygen content ratio in the Si-C composite particles by the above silicon content ratio, the oxygen content ratio when the silicon content ratio in the Si-C composite particles was set to 100 mass% was obtained in mass%.

The measurement of the oxygen content ratio was conducted within two days after the production of the Si-C composite particles.

<Scanning electron microscope (Scanning Electron Microscope: SEM) and energy dispersive X-ray spectroscope (Energy Dispersive X-ray Spectroscopy: EDS)>

The sample was supported on a carbon tape, and in the case of Si-C composite particles observation, observation was performed as is. In the case of cross-sectional observation, a cross-section of a processed product was observed using a Cross Section Polisher (registered trademark) made by JEOL. Observations and measurements were performed by the following methods.

- SEM: Scanning Electron Microscope Device: Regulus (registered trademark) 8220 (made by Hitachi High-Tech Corporation)
- EDS: XFlash (registered trademark) 5060 FlatQUAD (made by Bruker Corporation)
- Acceleration voltage: 1 to 20 kV

<BET specific surface area and pore volume (nitrogen adsorption test)>

Using the Quantachrome (Quantachrome) NOVA (registered trademark) 4200e as the measuring device, the sample was placed in a sample cell (9 mm × 135 mm) to achieve a total surface area of 2 to 60 m$^2$, dried for 1 hour under vacuum conditions at 300°C, the sample weight was measured, and measurement was performed. Nitrogen was used as the gas for measurement.

The minimum relative pressure setting during measurement was 0.005, and the maximum relative pressure setting was 0.995. The BET specific surface area of the porous carbon material was calculated from the adsorption isotherm data below a relative pressure of 0.08 near 0.005 using the BET multi-point method.

The BET specific surface area of the Si-C composite particles was calculated from the adsorption isotherm data at three points near relative pressures of 0.1, 0.2, and 0.3 using the BET multi-point method.

The total pore volume $V_{0.99}$ was determined by calculating the adsorption amount at a relative pressure of 0.99 using linear approximation from the adsorption isotherm data at two points around a relative pressure of 0.99, and by using the standard molar volume of nitrogen, the density of liquid nitrogen, and the atomic weight of nitrogen.

The pore volume $V_{0.01}$ at a relative pressure of 0.01 was determined similarly to $V_{0.99}$ by calculating the adsorption amount at a relative pressure of 0.01 using linear approximation from the adsorption isotherm data at two points around a relative pressure of 0.01.

At this time, the density of nitrogen liquid was calculated as 0.808 (g/cm$^3$), the standard molar volume of nitrogen as 22.4133 L, and the atomic weight of nitrogen as 14.0067.

<<Stirring treatment in water>>

Si-C composite particles prepared below were subjected to stirring treatment in water under the following conditions using the following dispersion device.

  Processing device: (Made by Primix Corporation, Model No.: Filmix (registered trademark) 40-40)
  Composition (mass ratio): Purified water: Si-C composite particles = 90:10
  Charging amount: 15 g in total
  Processing conditions: Circumferential speed 30 m/s, 5 minutes

<Volume change rate of stirring treatment in water (%)>

For the 50% particle size ($_{Dn50}$) in the cumulative particle size distribution according to the number criteria of Si-C composite particles before the stirring treatment in water, the particle size distribution measurement described above was performed on the Si-C composite particles prepared below, and the volume ($cm^3$) of one sphere having this $D_{n50}$ as a diameter was determined from the value ($\mu m$) of the 50% particle size ($D_{n50}$) according to the cumulative particle size distribution according to the number criteria.

For the Si-C composite particles after the stirring treatment in water, the particle size distribution measurement described above was performed. From the value ($\mu m$) of the 50% particle size ($D_{n50}$) in the cumulative particle size distribution of the obtained number criteria, the volume ($cm^3$) of one sphere having this $D_{n50}$ as a diameter was determined.

Note that the above volume ($cm^3$) was determined as $4\pi/3 \times$ (the obtained 50% particle size ($D_{n50}$)/2) $^3$/(1.0 $\times$ $10^{12}$) respectively.

The obtained volume after stirring in water ($cm^3$) was substituted into the following formula to obtain the volume change rate (%) after stirring in water, and the results are shown in Tables 2 and 3, respectively.

Volume change rate (%) = {1 - (volume ($cm^3$) of a sphere having a diameter of 50% particle size ($D_{n50}$) in the cumulative particle size distribution of the number standard of Si-C composite particles after stirring in water)/(volume ($cm^3$) of a sphere having a diameter of 50% particle size ($D_{n50}$) in the cumulative particle size distribution of the number standard of Si-C composite particles before stirring in water)} $\times$ 100

<Battery evaluation>

<<Preparation of negative electrode sheet>>

Styrene butadiene rubber (SBR) and carboxymethylcellulose (CMC) were used as binders.

Specifically, an aqueous SBR dispersion in which 40 mass% of SBR was dispersed and an aqueous CMC solution in which 2 mass% of CMC powder was dissolved were obtained.

A mixture of carbon black (SUPERC45 registered trademark, made by Imerys Graphite & Carbon) and single-layer carbon nanotubes (5 $\mu m$ long) was prepared in a 5:1 mass ratio for a mixed conductivity aid.

18.9 parts by mass of Si-C composite particles were mixed with 81.1 parts by mass of graphite particles to obtain a mixed negative electrode material. An aqueous CMC solution having a mixed negative electrode material of 96.4 parts by mass, a mixed conductivity aid of 0.6 parts by mass, and a CMC solid content of 1.5 parts by mass, and an SBR aqueous dispersion having a SBR solid content of 1.5 parts by mass were mixed, an appropriate amount of water for viscosity adjustment was added thereto, and the mixture was kneaded in a planetary centrifugal mixer (made by Shinky Corporation) to obtain a slurry for forming an negative electrode composite layer. The slurry concentration was 45 to 55 mass%.

For the graphite, artificial graphite was used having a BET specific surface area = 2.7 $m^2$/g, $D_{v10} = 7$ $\mu m$, $D_{v50} = 14$ $\mu m$, $D_{v90} = 27$ $\mu m$, tap density = 0.98 g/$cm^3$, first discharge specific capacity 360 mAh/g, and first Coulomb efficiency of 92%.

The slurry for forming the negative electrode composite layer was uniformly applied on a 20 $\mu m$ thick copper foil serving as a current collector foil using a 150 $\mu m$ gap doctor blade, dried using a hot plate, and dried under vacuum at 70°C for 12 hours to form the negative electrode composite layer on the current collector foil. This is referred to as a negative electrode sheet (sheet consisting of a negative electrode composite layer and a current collecting foil).

The negative electrode was obtained by punching from the negative electrode sheet to 16 mmø, forming the electrode under pressure using a uniaxial press, and adjusting the negative electrode composite layer density to 1.6 g/$cm^3$.

The electrode density (negative electrode density) of the negative electrode was calculated as follows. The mass and thickness of the negative electrode obtained by the above method were measured, and the mass and thickness of the current collecting foil, which had been punched out to 16 mmø and separately measured, were subtracted to obtain the mass and thickness of the negative electrode composite layer, and the electrode density (negative electrode density) was calculated from this value.

<<Production of evaluation cells (lithium-to-pole cells)>>

A separator impregnated with an electrolyte solution (microporous film made of polypropylene) was interposed and laminated in an insulated gasket made of polypropylene (inner diameter of about 18 mm) using the negative electrode described above and a 1.7 mm thick metallic lithium foil punched out to 17.5 mmø. At this time, the surface of the negative electrode composite layer was laminated so as to face the metallic lithium foil across the separator. This was placed in a 2,320-coin type cell and sealed using a rivet machine to form an evaluation cell (lithium-to-pole cell).

The electrolytic solution in the evaluation cell was obtained by mixing 1 part by mass of vinylene carbonate (VC) with 100 parts by mass of solvent in which ethylene carbonate, ethyl methylcarbonate, and diethylcarbonate were mixed at a 3:5:2 volume ratio, and further dissolving the electrolyte lithium hexafluorophosphate ($LiPF_6$) in such a concentration of 1 mol/L.

<<First Charge Ratio Capacity and First Discharge Ratio Capacity>>

A charge/discharge test was performed using an evaluation cell. Constant current charging (lithium insertion) was performed from OCV (Open Circuit Volume) to 0.005 V at a current value equivalent to 0.1 C. When the cell voltage reached 0.005 V, the charging method was switched to constant voltage charging (lithium insertion). The cut-off condition was set as the time point at which the current value attenuated to a 0.005 C equivalent. The specific capacity at this time was set to the first charge ratio capacity. Next, a constant current discharge (lithium desorption) was performed at a current value equivalent to 0.1 C using a cutoff voltage of 1.5 V. The specific capacity at this time was set to the initial discharge ratio capacity. Here, the "specific capacity" was determined by dividing the measured capacity of the coin cell by the mass of the negative electrode material used.

The charge/discharge tests were conducted in a constant temperature vessel set at 25°C. In addition, in the present test, a "current value equivalent to 1 C" is the magnitude of current capable of completing discharge of the capacity of the negative electrode estimated from the mass of Si and carbon (including graphite) of the negative electrode active material included in the negative electrode and the theoretical specific capacity (4,200 mAh/g and 372 mAh/g, respectively) in one hour.

<<First Coulomb Efficiency>>

The first Coulomb efficiency (%) was set to be (first discharge ratio capacity)/(first charge ratio capacity) × 100, which is a numerical value obtained by dividing the first discharge ratio capacity by the first charge ratio capacity as a percentage.

[Example 1]

180.0 g of phenol (Kanto Chemical Co., Inc.), 216.0 g of polyvinyl alcohol (GM-14R (18 mass% solid content aqueous solution), Mitsubishi Chemical Corporation), and 117 g of water were added in a flask equipped with a cooling tube and stirrer, and stirred at 50°C, 150 rpm. Additionally, 0.971 g of 74.1 mass% tetrahydroxymethyl phosphonium sulfate aqueous solution (THPS, Tokyo Chemical Industry Co., Ltd.) was added to the raw material phenol, and while stirring at 50°C, 250 rpm, 5.4 g of triethylamine (Kanto Chemical Co., Inc.) was added. Furthermore, 383.4 g of 37 mass% aqueous formaldehyde solution (made by Kanto Chemical Co., Ltd.) was added while stirring at 50°C and 500 rpm, and this was stirred at 95°C and 500 rpm, 9.0 g of triethylamine (made by Kanto Chemical Co., Ltd.) was added 2 hours after the temperature was raised to 95°C, 5.4 g of triethylamine (made by Kanto Chemical Co., Ltd.) was added 3 hours and 30 minutes after the temperature was raised to 95°C, and stirring was continued at 95°C for 1 hour and 30 minutes, and then the temperature was lowered to 30°C to obtain a phenol resin dispersion. The obtained phenol resin dispersion was added a mixed solvent of pure water:ethanol=2:1 (w/w), washed with stirring, and filtered to remove the catalyst and unreacted materials, and then the phenol resin was synthesized by removing the fractions under reduced pressure of 80°C and 50 mg (≈6.67 kPa) (that is, the build-up method).

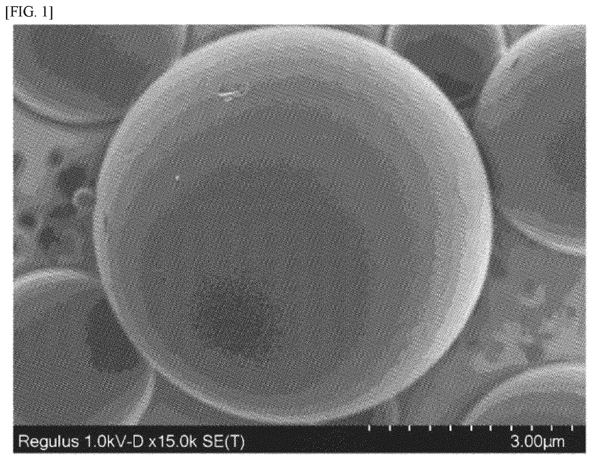

The obtained phenolic resin was dried in an air atmosphere in a dryer at 120°C for 16 hours, and then carbonized by heating in a nitrogen atmosphere at 900°C for 1 hour. 5 g of carbonized phenol resin was placed in a ceramic boat and set in a tube electric furnace. Nitrogen gas was discharged at 500 sccm and the atmosphere was sufficiently replaced, and then the temperature of the electric furnace was raised to 950°C, and the carbon dioxide gas stream of 250 sccm was switched to perform the activation. A calibration curve was created from a plot of the activation time and the total pore volume under the above conditions, and the activation speed was estimated from this. Using this activation rate, the remaining charred phenol resin was subjected to activation to obtain the porous carbon material described in Table 1-1. Scanning electron microscope (SEM) photographs of the obtained porous carbon are shown in FIG. 1.

Thereafter, the obtained porous carbon was charged into the inside of the tube furnace, the tube furnace was replaced with argon, and the reaction was carried out by flowing silane gas into the tube furnace in accordance with the conditions of step (C) described in Table 1-1.

Next, the inside of the tube furnace was replaced with argon and then depressurized, and the gas used in step (D) described in Table 1-1 (hydrocarbon gas having an unsaturated bond) was flowed for 300 sccm to obtain atmospheric pressure (760 torr = 1013.25 hPa). Thereafter, the reaction was carried out according to the conditions of step (D) described in Table 1-1.

Next, the inside of the tube furnace was replaced with argon, and the Si-C composite particles were removed from the tube furnace after the temperature dropped to room temperature. The physical properties of the obtained Si-C composite particles are shown in Tables 2-1 and 2-2. The physical property values of the Si-C composite particles after the water stirring treatment are shown in Tables 2 and 3. Furthermore, the evaluation results of the coin cells using Si-C composite particles that were not subjected to the stirring treatment in water mixed with graphite particles are shown in Tables 2 and 3.

[Table 1-1]

| | Raw material (porous carbon) | | | | Step (C) | | | | | | | Step (D) | | | | | | |
|---|---|---|---|---|---|---|---|---|---|---|---|---|---|---|---|---|---|---|
| | Particle size adjustment method | BET surface area | Total pore volume V$_{0.99}$ | D$_{V50}$ | Amount of raw material added | Hydrocarbon having unsaturated bond | Hydrocarbon concentration | Gas flow rate | Temperature | Pressure | Processing time | Hydrocarbon having unsaturated bond | Hydrocarbon concentration | Gas flow rate | Temperature | Pressure | Processing time |
| | − | m²/g | cc/g | μm | g | − | vol% | sccm | ℃ | torr | h | − | vol% | sccm | ℃ | torr | h |
| Example 1 | Build-up | 2000 | 1.0 | 4.7 | 17 | Silane | 100 | 130 | 400 | 760 | 3.00 | Ethylene | 100 | 0 | 350 | 798 | 1.9 |
| Example 2 | Build-up | 2000 | 1.0 | 5.2 | 17 | Silane | 100 | 130 | 400 | 760 | 3.03 | Ethylene | 100 | 0 | 350 | 798 | 2.0 |
| Comparative Example 1 | Break-down | 1650 | 0.7 | 8.7 | 17 | Silane | 100 | 130 | 400 | 760 | 2.00 | − | − | − | − | − | − |
| Comparative Example 2 | Break-down | 1650 | 0.7 | 8.7 | 17 | Silane | 100 | 130 | 400 | 760 | 2.00 | Ethylene | 100 | 0 | 350 | 798 | 2.0 |

[Table 1-2]

| | Step E | | | | | | | | | | | | | |
|---|---|---|---|---|---|---|---|---|---|---|---|---|---|---|
| | Step E-1 | | | | | | | Step E-2 | | | | | | |
| | Oxidative gas | Temperature of oxidative gas | Type of dilution gas | Gas flow rate | Temperature | Pressure | Processing time | Oxidative gas | Temperature of oxidative gas | Type of dilution gas | Gas flow rate | Temperature | Pressure | Processing time |
| | − | vol% | − | sccm | ℃ | torr | h | − | vol% | − | sccm | ℃ | torr | h |
| Example 1 | − | − | − | − | − | − | − | − | − | − | − | − | − | − |
| Example 2 | − | − | − | − | − | − | − | − | − | − | − | − | − | − |
| Comp. Example 1 | Oxygen | 5 | Argon | 1000 | 70 | 760 | 0.5 | Oxygen | 10 | Argon | 1000 | 70 | 760 | 0.5 |
| Comp. Example 2 | − | − | − | − | − | − | − | − | − | − | − | − | − | − |

[Example 2]

The phenolic resin dispersion obtained in Example 1 was left to stand for 15 hours, the supernatant was removed, and the remaining precipitated portion was spread out on a bat, dried in an air atmosphere at 120°C for 16 hours in a dryer, and then crushed in a wonder blender, heated in a nitrogen atmosphere at 900°C for 1 hour, and carbonized. After the temperature was lowered, this was removed from the firing furnace and ground again using a wonder blender.

5 g of carbonized phenol resin was placed in a ceramic boat and set in a tube electric furnace. Nitrogen gas was discharged at 500 sccm and the atmosphere was sufficiently replaced, and then the temperature of the electric furnace was raised to 950°C, and the carbon dioxide gas stream of 250 sccm was switched to perform the activation. A calibration curve was created from a plot of the activation time and the total pore volume under the above conditions, and the activation speed was estimated from this. Using this activation rate, the remaining carbonized phenol resin was subjected to activation to obtain an agglomerate of porous carbon materials.

Thereafter, the obtained porous carbon material agglomerate was crushed using a jet mill (Nisshin Engineering Co., Ltd., SJ-500) at a grinding pressure of 0.75 MPa to obtain porous carbon having the physical properties described in Table 1-1.

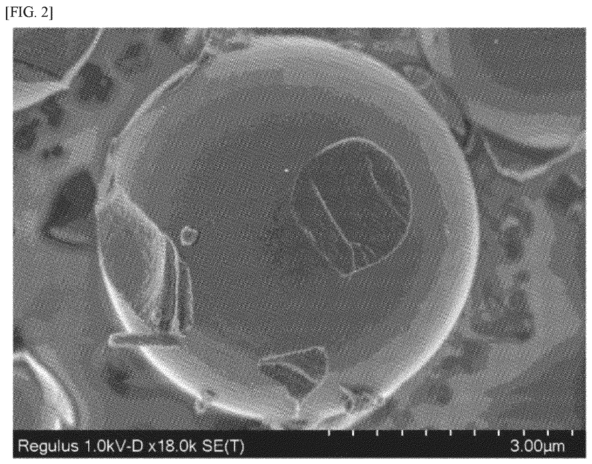

From the results of SEM observation shown in FIG. 2, it was understood that the obtained porous carbon of Example 2, unlike the porous carbon produced in Example 1, was produced by the build-up method, although there were portions lacking on the particle surface, and thus the primary particles retained a generally spherical shape.

Thereafter, the obtained porous carbon was charged into the inside of the tube furnace, the tube furnace was replaced with argon, and the reaction was carried out by flowing silane gas into the tube furnace in accordance with the conditions of step (C) described in Table 1-1.

Next, the inside of the tube furnace was replaced with argon, and then depressurized, and the gas used in step (D) described in Table 1-1 (hydrocarbon gas having an unsaturated bond) was passed through the tube at a flow rate of 300 sccm to obtain atmospheric pressure (760 torr). Thereafter, the reaction was carried out according to the conditions of step (D) described in Table 1-1.

Next, the inside of the tube furnace was replaced with argon, and the Si-C composite particles were recovered from the tube furnace after the temperature dropped to room temperature. The physical properties of the obtained Si-C composite particles are shown in Tables 2-1 and 2-2. The physical property values of the Si-C composite particles after the water stirring treatment are shown in Tables 2 and 3. Furthermore, the evaluation results of the coin cells using Si-C composite particles that were not subjected to the stirring treatment in water mixed with graphite particles are shown in Tables 2 and 3.

[Comparative Example 1]

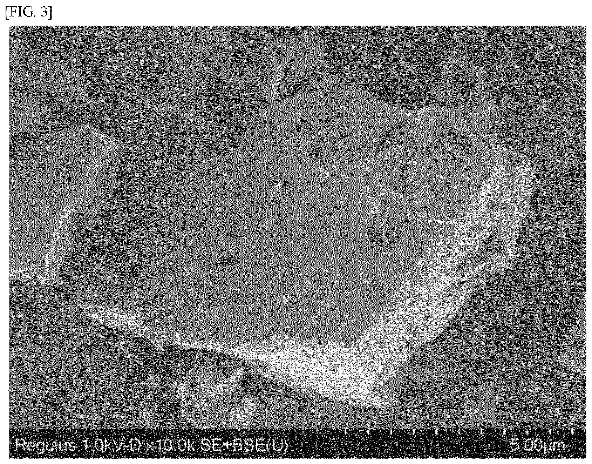

A commercial phenolic resin-based porous carbon 1 produced by the breakdown method, having the physical properties described in Table 1-1 and being amorphous as can be seen from the SEM image thereof (FIG. 3), was charged into the inside of the tube furnace, replaced in the tube furnace with argon, and then silane gas was flowed into the tube furnace in accordance with the conditions of step (C) described in Table 1-1.

Next, the tube furnace was replaced with argon, and after the temperature dropped to 50°C, gas was passed through the tube furnace in accordance with the conditions of step (E) described in Tables 1 and 2 (Steps E-1 and E-2), and the reaction was carried out to obtain Si-C composite particles. Step (E) was performed in the order of steps E-1 and E-2. The structure and physical property values of the obtained Si-C composite particles are shown in Tables 2-1 and 2-2. The physical property values of the Si-C composite particles after the water stirring treatment are shown in Tables 2 and 3. Furthermore, the evaluation results of the coin cells using Si-C composite particles that were not subjected to the stirring treatment in water mixed with graphite particles are shown in Tables 2 and 3.

[Comparative Example 2]

A commercial phenolic resin-based porous carbon 1 produced by the breakdown method, having the physical properties described in Table 1-1 and being amorphous as can be seen from the SEM image thereof (FIG. 3), was charged into the inside of the tube furnace, replaced in the tube furnace with argon, and then silane gas was flowed into the tube furnace in accordance with the conditions of step (C) described in Table 1-1.

Next, the inside of the tube furnace was replaced with argon, and then depressurized, and the gas used in step (D) described in Table 1-1 (hydrocarbon gas having an unsaturated bond) was passed through the tube at a flow rate of 300 sccm to obtain atmospheric pressure (760 torr). Thereafter, the reaction was carried out according to the conditions of step (D) described in Table 1-1.

Next, the inside of the tube furnace was replaced with argon, and the Si-C composite particles were recovered from the tube furnace after the temperature dropped to room temperature. The physical properties of the obtained Si-C composite particles are shown in Tables 2-1 and 2-2. The physical property values of the Si-C composite particles after the water stirring treatment are shown in Tables 2 and 3. Furthermore, the evaluation results of the coin cells using Si-C composite particles that were not subjected to the stirring treatment in water mixed with graphite particles are shown in Tables 2 and 3.

[Table 2-1]

| Physical Properties of Si-C composite particles | | | | | | | | | | |
|---|---|---|---|---|---|---|---|---|---|---|
| | Silicon Content | Carbon Content | BET Specific Surface Area | True Density | $D_{V10}$ | $D_{V50}$ | $D_{V90}$ | $D_{n10}$ | $D_{n50}$ | $D_{n90}$ | Volume of Sphere Having Diameter $D_{n50}$ |
| | Mass % | Mass % | $m^2/g$ | $g/cm^3$ | $\mu m$ | $\mu m$ | $\mu m$ | $\mu m$ | $\mu m$ | $\mu m$ | $cm^3$ |
| Example 1 | 56 | 0.3 | 1.5 | 1.93 | 2.4 | 4.6 | 16.1 | 1.7 | 2.5 | 4.1 | $7.99 \times 10^{-12}$ |
| Example 2 | 55 | 0.6 | 1.8 | 1.93 | 2.6 | 5.3 | 13.0 | 1.7 | 2.5 | 4.5 | $8.64 \times 10^{-12}$ |
| Comp. Example 1 | 41 | 2.1 | 10.7 | 1.90 | 3.1 | 8.5 | 16.3 | 0.8 | 1.2 | 3.1 | $9.98 \times 10^{-13}$ |
| Comp. Example 2 | 42 | 0.4 | 2.3 | 1.85 | 3.2 | 8.4 | 16.3 | 0.9 | 1.4 | 3.7 | $1.43 \times 10^{-12}$ |

[Table 2-2]

| | Atomic Number Ratio According to XPS Narrow Spectra (Atom Ratio) | | | | Si Type Ratio According to XPS Si 2p Spectral State Analysis | | | | $A_C/(A_C - A_{Si} \times (B_{SiO2} + B_{SiO}))$ | Raman Spectrum | | | XRD | | |
|---|---|---|---|---|---|---|---|---|---|---|---|---|---|---|---|
| | $A_C$ | $A_O$ | $A_{Si}$ | Total | $B_{SiO2\ 4\ Value}$ 103eV | $B_{SiO\ 2\ Value}$ 101ev | $B_{Si\ 0\ Value}$ 99eV | Total | | R Value | Si Peak Position | $I_{Si}/I_G$ | Peak from Graphite-derived Substance | Half-width of Si (111) plane | $I/I_{Si(111)}$ |
| Example 1 | 0.31 | 0.22 | 0.47 | 1.00 | 0.03 | 0.08 | 0.89 | 1.00 | 0.86 | 1.2 | 470 | 0.33 | None | 5.4 | 0.0 |
| Example 2 | 0.28 | 0.25 | 0.45 | 0.98 | 0.08 | 0.11 | 0.81 | 1.00 | 0.77 | 1.2 | 470 | C.37 | None | 5.6 | 0.0 |
| Comp. Ex. 1 | 0.15 | 0.46 | 0.39 | 1.00 | 0.42 | 0.13 | 0.45 | 1.00 | 0.41 | 1.1 | 470 | 0.15 | None | 5.9 | 0.0 |
| Comp. Ex. 2 | 0.33 | 0.18 | 0.49 | 1.00 | 0.05 | 0.07 | 0.88 | 1.00 | 0.85 | 1.1 | 470 | 0.16 | None | 5.7 | 0.0 |

Physical Properties of Si-C composite particles

[Table 2-3]

| | After stirring in water (Filmix 30m/s, 5min) | | | | Grinding resistance | Coin cell evaluation | | | | |
|---|---|---|---|---|---|---|---|---|---|---|
| | $D_{n10}$ | $D_{n50}$ | $D_{n90}$ | Volume of sphere having diameter of Dn50 | Volumetric change ratio | Si-C composite particles | Graphite particles | Initial charge specific capacity | Initial discharge specific capacity | Initial Coulombic efficiency |
| | μm | μm | μm | cm³ | % | mass% | mass% | mAh/g | mAh/g | (%) |
| Example 1 | 1.7 | 2.5 | 4.0 | $7.70 \times 10^{-12}$ | 4 | 18.9 | 81.1 | 788 | 734 | 93.2 |
| Example 2 | 1.7 | 2.5 | 4.5 | $8.38 \times 10^{-12}$ | 3 | 18.9 | 81.1 | 777 | 723 | 93.0 |
| Comp. Ex. 1 | 0.6 | 1.0 | 2.3 | $5.34 \times 10^{-13}$ | 46 | 18.9 | 81.1 | 709 | 649 | 91.5 |
| Comp. Ex. 2 | 0.7 | 1.1 | 2.5 | $6.45 \times 10^{-13}$ | 55 | 18.9 | 81.1 | 712 | 653 | 91.7 |

As shown in Tables 2 and 3, it can be seen that the Si-C composite particles of Examples 1 and 2 had a smaller volume change rate and did not produce fine particles compared to the Si-C composite particles of Comparative Examples 1 and 2. Furthermore, the first Coulomb efficiency of the coin cell evaluation was higher in Examples 1 and 2 than in Comparative Examples 1 and 2. In light of the results of this evaluation, it is thought that the first Coulomb efficiency of ordinary lithium-ion batteries will also be increased. Note that it is inferred that a factor in the decrease in the first Coulomb efficiency observed in the comparative examples is the increase in irreversible capacity. The reason for this increase in irreversible capacity is unclear, but it is estimated that it is due to the possibility of an increase in the amount of fine powders generated, the increase in side reactions associated with such, and the large amount of Si oxides.

That is, it can be seen that the lithium-ion battery provided with the negative electrode mixture containing the Si-C composite particles of Examples 1 and 2 has superior first Coulomb efficiency compared to the lithium-ion battery provided with the negative electrode condensing agent containing the Si-C composite particles of Comparative Examples 1 and 2.

**Industrial Applicability**

The Si-C composite particles of the present invention can be suitably used as negative electrode materials constituting the negative electrode composite layer of lithium-ion batteries and the like, for example. The lithium-ion battery provided with the negative electrode composite layer containing the Si-C composite particles of the present invention can be suitably used in applications requiring high capacity and high output, such as IT equipment such as smartphones and tablet PCs, vacuum cleaners, power tools, electric bicycles, drones, and automobiles.

**Claims**

1. Si-C composite particles comprising a carbon material and silicon, wherein:

   a true density by dry density measurement using helium gas is 2.20 g/cm³ or less;
   a peak is present in a Raman spectrum of the Si-C composite particles at 450 to 495 cm⁻¹; and
   a volumetric change rate calculated by the following formula is 10% or less.

   Volume change rate (%) = {1 - (volume (cm³) of a sphere having a diameter of 50% particle size ($D_{n50}$) in a cumulative particle size distribution of a number standard of Si-C composite particles after stirring in water)/ (volume (cm³) of a sphere having a diameter of 50% particle size ($D_{n50}$) in the cumulative particle size distribution of the number standard of Si-C composite particles before stirring in water)} × 100

2. The Si-C composite particles according to claim 1, wherein the carbon material is porous carbon, and the silicon is contained in at least a portion of pores of the porous carbon.

3. The Si-C composite particles according to claim 1, wherein a silicon content is 30 to 80 mass% relative to the total mass of the Si-C composite particles.

4. The Si-C composite particles according to claim 1, wherein a BET specific surface area is 0.2 to 30.0 m²/g.

5. The Si-C composite particles according to claim 1, wherein a 50% particle size $D_{v50}$ in a volume-based cumulative particle size distribution is 1.0 to 30.0 $\mu$m.

6. The Si-C composite particles according to claim 1, wherein an oxygen content is 0.1 to 5.0 mass% relative to the total mass of the Si-C composite particles.

7. The Si-C composite particles according to claim 1, wherein, in the Raman spectrum of the Si-C composite particles, a ratio $I_{si}/I_G$ is 1.3 or less when defining a peak intensity at 450 to 490 cm$^{-1}$ as $I_{si}$ and an intensity of a G band (peak intensity near 1580 cm$^{-1}$) as $I_G$.

8. The Si-C composite particles according to claim 1, wherein:

   atomic number ratios according to narrow spectra of Si, O, and C of the Si-C composite particles are Asi, $A_O$, and Ac, respectively;
   among Si type ratios according to Si 2p spectral state analysis, ratios of SiO$_2$ and SiO are defined as $B_{SiO2}$ and $B_{SiO}$;
   $A_{Si}$ is 0.05 or more; and
   at least one of the following formulas (1) and (2) is satisfied:

$$Y \geq 0.75 \qquad \ldots (1)$$

$$Y \geq -0.32X + 0.81 \ldots (2)$$

   [In formulas (1) and (2), X = $I_{Si}/I_G$, and Y = Ac/(Ac + $A_{si}$ $\times$ ($B_{SiO2}$ + $B_{SiO}$)); note that $A_{Si}$ + Ao + Ac = 1.00].

9. A negative electrode material for a lithium-ion battery comprising the Si-C composite particles according to any one of claims 1 to 8.

10. A negative electrode composite layer for a lithium-ion battery comprising the negative electrode material for a lithium-ion battery according to claim 9.

11. The negative electrode composite layer for a lithium-ion battery according to claim 10, comprising at least one selected from the group consisting of monolayer carbon nanotubes, multilayer carbon nanotubes, and vapor phase carbon fibers.

12. A lithium-ion battery comprising the negative electrode composite layer for a lithium-ion battery according to claim 10.

13. The method for producing Si-C composite particles according to any one of claims 1 to 8, comprising:

   a step (A) for preparing a carbon precursor by a build-up method;
   a step (B) for carbonizing and activating the carbon precursor to obtain a carbon material; and
   a step (C) for preparing the Si-C composite particles by bringing the carbon material into contact with a silicon-containing gas and precipitating silicon in at least one of the pores and surfaces of the carbon material.

[FIG. 1]

Regulus 1.0kV-D x15.0k SE(T)　　　　　　　　　　3.00μm

[FIG. 2]

Regulus 1.0kV-D x18.0k SE(T)                3.00µm

[FIG. 3]

Regulus 1.0kV-D x10.0k SE+BSE(U)    5.00μm

## INTERNATIONAL SEARCH REPORT

| International application No. |
|---|
| **PCT/JP2023/041032** |

**A. CLASSIFICATION OF SUBJECT MATTER**

*C01B 32/05*(2017.01)i; *C01B 32/168*(2017.01)i; *C01B 33/029*(2006.01)i; *H01M 4/36*(2006.01)i; *H01M 4/38*(2006.01)i; *H01M 4/62*(2006.01)i; *H01M 4/134*(2010.01)i
FI: C01B32/05; H01M4/36 A; H01M4/38 Z; H01M4/134; H01M4/62 Z; C01B33/029; C01B32/168

According to International Patent Classification (IPC) or to both national classification and IPC

**B. FIELDS SEARCHED**

Minimum documentation searched (classification system followed by classification symbols)

C01B32/00-32/991; H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2022/250109 A1 (SHOWA DENKO K.K.) 01 December 2022 (2022-12-01) entire text | 1-13 |
| A | WO 2021/241754 A1 (SHOWA DENKO K.K.) 02 December 2021 (2021-12-02) entire text | 1-13 |
| A | JP 2022-153561 A (GROUP 14 TECHNOLOGIES, INC.) 12 October 2022 (2022-10-12) entire text | 1-13 |
| A | JP 2018-163776 A (PANASONIC INTELLECTUAL PROPERTY MANAGEMENT CO., LTD.) 18 October 2018 (2018-10-18) entire text | 1-13 |
| A | JP 2022-57736 A (TODA KOGYO CORP.) 11 April 2022 (2022-04-11) entire text | 1-13 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 660 133 A1

**INTERNATIONAL SEARCH REPORT**

International application No.

**PCT/JP2023/041032**

### C. DOCUMENTS CONSIDERED TO BE RELEVANT

| Category* | Citation of document, with indication, where appropriate, of the relevant passages | Relevant to claim No. |
|---|---|---|
| A | JP 2020-87910 A (CHUNG SHAN INST. OF SCIENCE AND TECHNOLOGY ARMAMENTS BUREAU MINISTRY OF NATIONAL DEFENCE) 04 June 2020 (2020-06-04)<br>entire text | 1-13 |

Form PCT/ISA/210 (second sheet) (July 2022)

### INTERNATIONAL SEARCH REPORT
#### Information on patent family members

International application No.

**PCT/JP2023/041032**

| Patent document cited in search report | | | Publication date (day/month/year) | Patent family member(s) | | | Publication date (day/month/year) |
|---|---|---|---|---|---|---|---|
| WO | 2022/250109 | A1 | 01 December 2022 | (Family: none) | | | |
| WO | 2021/241754 | A1 | 02 December 2021 | EP | 004160726 | A1 | |
| | | | | entire text | | | |
| | | | | US | 2023/0223537 | A1 | |
| | | | | entire text | | | |
| | | | | CN | 115668545 | A | |
| | | | | KR | 10-2023-0017259 | A | |
| JP | 2022-153561 | A | 12 October 2022 | US | 2017/0170477 | A1 | |
| | | | | entire text | | | |
| | | | | EP | 003836261 | A1 | |
| | | | | entire text | | | |
| | | | | CN | 108475779 | A | |
| | | | | KR | 10-2018-0113187 | A | |
| JP | 2018-163776 | A | 18 October 2018 | (Family: none) | | | |
| JP | 2022-57736 | A | 11 April 2022 | (Family: none) | | | |
| JP | 2020-87910 | A | 04 June 2020 | EP | 003653576 | A2 | |
| | | | | entire text | | | |
| | | | | CN | 111200123 | A | |

Form PCT/ISA/210 (patent family annex) (July 2022)

**REFERENCES CITED IN THE DESCRIPTION**

**Patent documents cited in the description**

- JP 2018534720 A